# EUROPEAN PATENT SPECIFICATION

(11) **EP 2 763 410 B1**
(45) Date of publication and mention of the grant of the patent: **27.04.2016**
(21) Application number: 14153332.3
(22) Date of filing: 30.01.2014
(51) Int. Cl.: H04N 7/18, B60R 1/00, A42B 3/04, B62J 27/00, B62J 99/00

(54) **VEHICLE SAFETY SYSTEM**
FAHRZEUGSICHERHEITSSYSTEM
SYSTÈME DE SÉCURITÉ POUR UN VÉHICULE

(30) Priority: 04.02.2013 GB 201301950
(43) Date of publication of application: 06.08.2014
(73) Proprietor: Jam Technology Limited, County Durham, DL14 6XG (GB)
(72) Inventor: Hale, John, Barnard Castle, Durham DL12 8BP (GB); Pleydell, Mark, Ilminster, Somerset TA19 0JA (GB)
(74) Representative: Archer, Graham John

(56) References cited:
- WO-A1-2010/080610
- US-A1- 2003 122 930
- US-A1- 2008 239 080

## Description

The present invention relates to a system for improving vehicle safety. The present invention is particularly, but not exclusively, suitable for use in the improvement of motorcycle safety. However, it is to be appreciated that the present invention is also suitable for use in improving the safety of any suitable vehicle which it may be used in conjunction with.

Users of motorcycles must always be aware of the traffic situation behind them when the motorcycle is in use. Typically, in order to ascertain the situation behind them whilst travelling on a road for example, the user can either view the road behind them by means of their rear view mirrors or alternatively, they can turn their head.

Whilst rear view mirrors are currently used almost universally in order to assist with safely riding a motorcycle, they are only of limited use, since the reflected rear view provided by rear view mirrors is highly dependent upon the perspective of the user. Moreover, the image presented to the user of the motorcycle on rear view mirrors can appear small and can sometimes be partially obscured, for example by a body part of the user such as their arm, and can be subject to blurring as a result of vibration for example.

WO2010/080610 describes an electronic replacement for driver and passenger side view mirror systems.

US2003/122930 describes a rearview vision system for a vehicle includes at least one image capture device directed rearwardly with respect to the direction of travel of the vehicle.

Preferred embodiments of the present invention seek to overcome or at least alleviate the above described disadvantages associated with the prior art.

According to a first aspect of the present invention there is provided an imaging system for use on a vehicle, the system comprising the features of claim 1.

This provides the advantage that the user of the motorcycle is presented with a more useful view than that normally presented to them when they are travelling on a substantially straight road, in the event that they are intending to change lanes on a motorway, for example. To elaborate, when they are travelling straight ahead in the middle lane of a motorway, a large proportion of the view able to be presented to them on the image display typically comprises the view directly behind them; that is, the middle lane. Notwithstanding this, it would be more useful for the user of the motorcycle to be able to view a greater portion of the slow and fast lanes than that which is typically presented to them on the image display means, and less of the middle lane, since it is the situation in the slow and fast lanes which presents the greater risk to them in the event that they are about to change lanes, for example. In this way, the presentation of a greater portion of the slow lane and the fast lane than would normally be displayed on the image display means, with a cropped or compressed view of the middle lane, for example, is achieved.

According to a second aspect of the present invention there is provided an imaging system for use on a vehicle, the system comprising the features of claim 2.

This provides the advantage that the user of the motorcycle is presented with a more useful view than that normally presented to them, in the event that they are travelling around a roundabout, for example. To elaborate, in this instance, it is more useful for them to be presented with a view which indicates to them the road situation normally seen when they look over their left shoulder (in the event that they are turning right around a roundabout, for example). This can provide the user with an early indication that another vehicle is intending to pull out onto the same roundabout as them, with an associated risk of a collision.

This providers the further advantage that the user of the motorcycle is presented with a more useful view than that normally presented to them, in the event that they are manoeuvring, ie, turning the motorcycle to some degree, to change lanes on a motorway, for example. To elaborate, in this instance, it is more useful for them to be presented with a view which indicates to them the road situation normally seen when they look over their left or right shoulders, depending upon whether they are moving into a faster lane or a slower lane, for example. This can provide the user with an early indication that there is already a vehicle in the space he intends to occupy.

Preferably, said turn detection means comprises a tilt measurement means mountable to the vehicle for measuring a tilt angle of the vehicle to the vertical, to provide said turn data in the form of tilt data.

This provides the advantage that an indication of whether a motorcycle for example, is turning, can be conveniently provided.

Alternatively, said turn direction means comprises an accelerometer mountable to the vehicle for detecting when the vehicle turns, to provide said turn data.

Preferably, in the event that the turn data is such that it indicates that the vehicle is turning, said image processing means is adapted to establish that portion of the image data which represents the portion of the view behind and to the left of the vehicle, and displays said portion of the view on the image display means.

Alternatively, in the event that the turn data is such that it indicates that the vehicle is turning, said image processing means is adapted to establish that portion of the image data which represents the portion of the view behind and to the right of the vehicle, and displays said portion of the view on the image display means.

This provides the advantage that a representation of a typical "blind spot" is presented to the user on the image display means, thereby reducing the risk of a collision.

According to a third aspect of the present invention there is provided an imaging system for use on a vehicle, the system comprising the features of claim 7.

Preferably, the displacement detection means comprises suspension movement detection means for detecting whether the suspension of the vehicle has shifted, in order to provide displacement data in the form of suspension shift data.

Preferably, the suspension movement detection means comprises a means for detecting a change in the pitch angle of the vehicle.

This provides the advantage that the mounting of an additional pillion passenger for example, to the motorcycle, does not result in the user of the motorcycle being presented with an image of the road behind them which is less than ideal.

To elaborate, when the user of the motorcycle is sitting on the motorcycle without a pillion passenger and viewing the situation on the road behind them on the image display means, the image that they are presented with is, for example, a useful image comprising the space 25% above the horizon line behind them and 75% below the horizon line behind them. However, in the event that an additional pillion passenger mounts the motorcycle, the suspension of the motorcycle may drop, with the result that the user would be presented with an image comprising the space only 10% above the horizon line behind them and 90% below the horizon line behind them, for example, which is not the most useful image for the user of the motorcycle. The provision of the suspension movement correction means alleviates this disadvantage, thereby ensuring that a useful image is consistently presented to the user.

This in turn provides the advantage that the user of the motorcycle does not have to manually adjust the imaging system in the event that a pillion passenger mounts the motorcycle; the adjustment, if required, is achieved automatically.

Alternatively, the displacement detection means comprises vibration detection means for detecting vibration of the image capturing means, in order to provide displacement data in the form of vibration data.

This provides the advantage that blurring and jumping of the image presented to the user of the motorcycle on the image display means is reduced, with the result that the image presented to the user of the motorcycle is clear enough to be an accurate representation of the road behind them, thereby improving safety.

According to a third aspect of the present invention there is provided an imaging system for use on a vehicle, the system comprising the features of claim 11.

This provides the advantage that, in the event that that speed of the motorcycle exceeds a predetermined value, the user of the motorcycle is presented with a more detailed image of the road behind them, in particular, other road users behind the, thereby improving safety. To elaborate, in the event that the user is travelling at speed on the motorcycle, the other road users behind him may appear small. The provision of a zoom mechanism in this way, whereby a zoomed in image of the road behind him is presented on the image display means when a particular speed is reached, can help the user to achieve a clearer picture of the road behind him, thereby increasing safety.

Preferably, said view includes further regions of interest, wherein the proportion of the view that comprises the further region of interest is directly related to the speed of the vehicle.

Preferably, the proportion of the view that comprises the further region of interest is substantially inversely proportional to the speed of the vehicle.

In this way, the amount by which the view of the road behind the user is zoomed in on is dependent upon how fast the vehicle is travelling. For example, in the event that the vehicle is travelling at 70mph, the zoom is greater than that which is implemented when the vehicle is travelling at 60mph.

Preferably, the imaging system further comprises speed measurement means mountable to the vehicle for measuring the speed of the vehicle, to provide said speed data.

In this way, the existing speed measurement means on the vehicle does not have to be adapted and employed in order to provide the speed data; instead, the imaging system itself can incorporate a speed measurement means.

Preferred embodiments of the present invention will now be described, by way of example only and not in any limitative sense, with reference to the accompanying drawings in which:-
Figure 1 shows a schematic view of an imaging system in accordance with a first embodiment of the present invention;
Figure 2 shows an example of an image displayed on an image display means forming part of an imaging system in accordance with the embodiment of Figure 1;
Figure 3 shows a schematic view of an imaging system in accordance with a second embodiment of the present invention;
Figure 4 shows a schematic view of an imaging system in accordance with a third embodiment of the present invention;
Figure 5 shows a portion of an imaging system in accordance with an embodiment of the present invention;
Figure 6 shows a schematic view of an imaging system in accordance with a fourth embodiment of the present invention;
Figure 7 shows a route typically taken by a motorcycle when crossing a roundabout;
Figure 8 shows an example of the portion of a captured image which is presented to a user of a motorcycle, by the imaging system of Figure 6;
Figure 9 shows a schematic view of an imaging system in accordance with a fifth embodiment of the present invention; and
Figure 10 shows an example of the portion of a captured image which is presented to a user of a motorcycle by the imaging system of Figure 9.

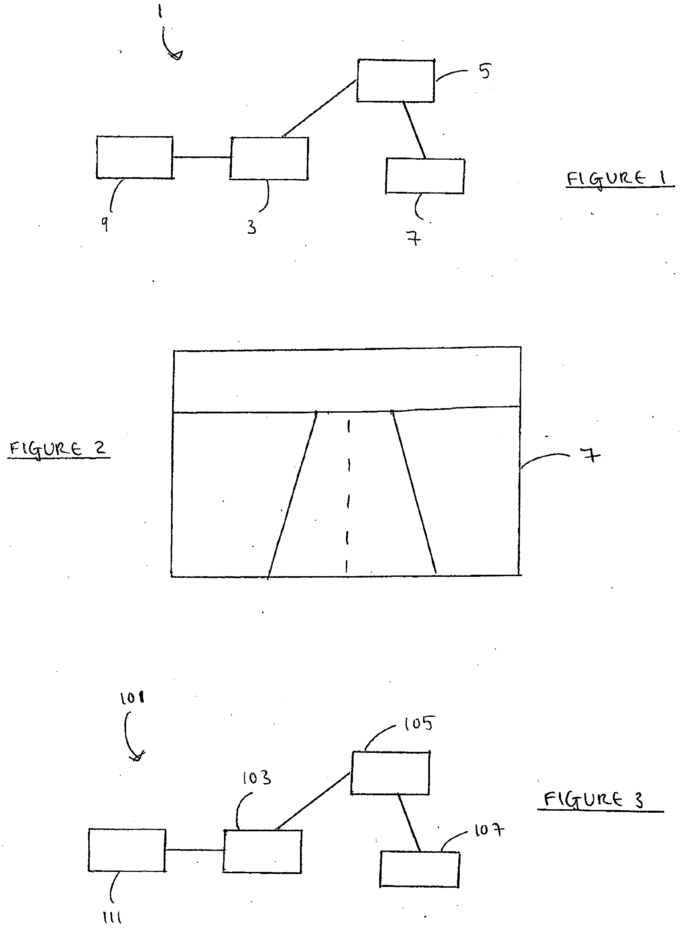

With reference in particular to Figures 1 and 2, a first embodiment of the imaging system is represented generally by reference numeral 1.

The imaging system 1 comprises an image capturing means comprising a camera 3 mountable to a vehicle, for example, just above the rear number plate of a motorcycle. The imaging system 1 further comprises image processing means 5 associated with the camera 3 and image display means 7 which in this embodiment is mounted to the safety helmet of the user of the motorcycle.

When the user of the motorcycle mounts the motorcycle, upon initiation of the imaging system 1, the image processing means 5 receives data from the camera 3, and by processing the received data according to an algorithm, establishes the horizon line and establishes that portion of the data which in this embodiment, represents an image which is 25% above the horizon line and 75% below the horizon line (that is, a useful image for the user of the motorcycle as shown in Figure 2), and sends that portion of the data to the image display means 7, in order to enable the useful image to be presented to the user of the motorcycle by means of display on the image display means 7.

The imaging system 1 further comprises a suspension movement correction means 9 associated with the camera 3, which is configured to facilitate the correction of vertical displacement of the camera 3 when it is mounted on the vehicle. For example, in the event that an additional pillion passenger mounts the motorcycle, the suspension of the vehicle will drop, with the result that the image presented to the user of the motorcycle is no longer the useful image. As a result, the suspension movement detection means 9 will detect the associated vertical movement of the camera 3 and generate suspension shift data which is received by the image processing means 5. The suspension shift data is then used by the image processing means 5 in order to select the portion of the image data representing the region of interest, in order to display the region of interest on the image display means 7.

In this way, the image presented to the user of the motorcycle by means of the image display means 7 remains the useful image comprising the space 25% above the horizon line and 75% below the horizon line, despite the fact that an additional pillion passenger has mounted the motorcycle. Accordingly, the user of the motorcycle does not have to manually adjust the camera 3 in the event that an additional pillion passenger mounts the motorcycle; the suspension movement correction means 9 ensures that the region of interest is consistently displayed on the image display means 7.

It is to be appreciated that the imaging system 1 is adapted to identify that the movement of the suspension, for example as a result of the mounting of an additional pillion passenger, is a long term change, and not a vertical displacement due to, for example, vibration of the camera due to uneven terrain.

With reference now to Figure 3, a second embodiment of the imaging system is represented generally by reference numeral 101.

The imaging system 101 comprises an image capturing means comprising a camera 103 mountable to a vehicle, for example, just above the rear number plate of a motorcycle. The imaging system 101 further comprises image processing means 105 associated with the camera 103 and image display means 107 which in this embodiment is mounted to the safety helmet of the user of the motorcycle.

When the user of the motorcycle mounts the motorcycle, upon initiation of the imaging system 101, the image processing means 105 receives data from the camera 103, and by processing the received data according to an algorithm, establishes the true horizon line and establishes that portion of the data which, in this embodiment, represents an image which is 25% above the true horizon line and 75% below the true horizon line (that is, a useful image for the user of the motorcycle), and sends that portion of the data to the image display means 107, in order to enable the useful image to be presented to the user of the motorcycle by means of display on the image display means 107.

The imaging system 101 further comprises a vibration detection means 111 which is configured to facilitate the correction for vibration of the camera 103 when it is mounted on the vehicle. In this way, the negative effects on the quality of the image display means 107 caused by vibration of the vehicle, are reduced.

For example, in the event that the road upon when the motorcycle is travelling is particularly uneven, the image presented to the user of the motorcycle on the image display means could become unclear. However, the vibration detection means 111 detects the associated vertical movement of the camera 103 caused by the vibration, and generates vibration data which is received by the image processing means 105. The vibration data is then used by the image processing means 105 in order to select the portion of the image data representing the region of interest, in order to display the region of interest on the image display means 107.

In this way, the image presented to the user of the motorcycle by means of the image display means 107 remains clear and substantially free from blurring.

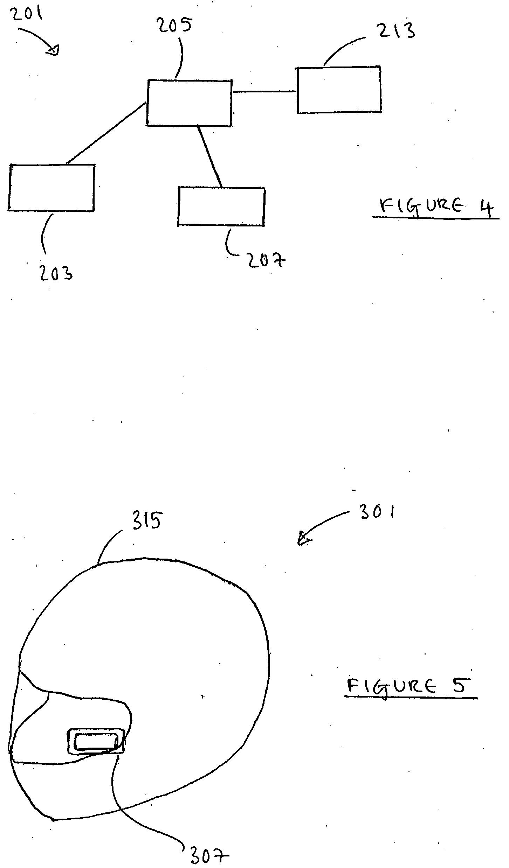

With reference in particular to Figure 4, a third embodiment of the imaging system is represented generally by reference numeral 201.

The imaging system 201 comprises an image capturing means comprising a camera 203 mountable to a vehicle, for example, just above the rear number plate of a motorcycle. The imaging system 201 further comprises image processing means 205 associated with the camera 203 and image display means 207 which in this embodiment is mounted to the safety helmet of the user of the motorcycle.

The imaging system 201 further comprises a speed measurement means 213 which is configured to detect the speed at which the vehicle is travelling. The image processing means 205 receives data from the speed measurement means 213, and by processing said data according to an algorithm, zooms in on the image in the event that the speed measured by the speed measurement means 213 is greater than a predetermined value.

It is to be appreciated that in this embodiment, the zoom is effected digitally. To elaborate, in the event that the speed of the vehicle is greater than predetermined value, a greater proportion of the image displayed on the image display means is occupied by a particular object in the view of the camera.

In this way, the user of the motorcycle is automatically provided with a zoomed image of the road behind them, in particular, a zoomed view of other road users, in the event that they begin to travel at a particular speed, in order to help reduce the chances of the user having an accident.

The actual amount by which the camera 203 zooms in on the road behind the motorcycle is related to the actual speed measured by the speed measurement means 213. For example, the faster the speed measured by the speed measurement means, the more the camera zooms in on the road behind the motorcycle.

It is to be appreciated that the amount of zoom applied may be directly proportional to the speed measured, or alternatively, it may follow some other convenient relationship, such as an exponential relationship.

With reference in particular to Figure 5, a portion of an imaging system in accordance with an embodiment of the present invention is represented generally by reference numeral 301.

The portion of the imaging system 301 comprises a mounting device in the form of a motorcycle helmet 315, comprising an image display means 307 which is positioned such that the user can view the image displayed by the image display means 307, without having their line of sight obscured by the image display means 307 itself.

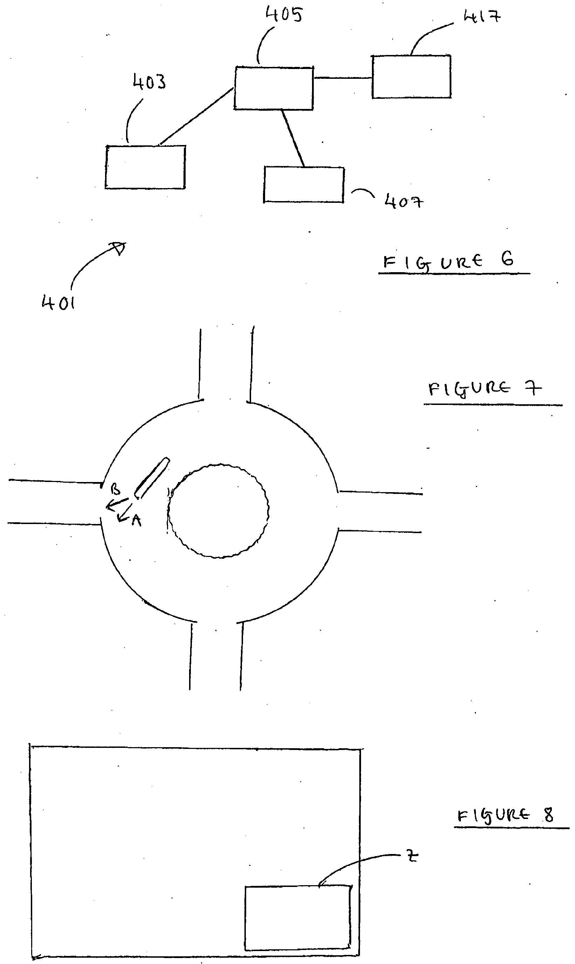

With reference tin particular to Figures 6 to 8, a fourth embodiment of the imaging system is represented generally by reference numeral 401.

The imaging system 401 comprises an image capturing means comprising a camera 403 mountable to a vehicle, for example, just above the rear number plate of a motorcycle. The imaging system 401 further comprises image processing means 405 associated with the camera 403 and image display means 407 which in this embodiment is mounted to the safety helmet of the user of the motorcycle.

The imaging system 401 further comprises a tilt sensor 417 which is configured to detect when the vehicle to which it is mounted, tilts beyond a predetermined value. This can be the situation when the motorcycle is crossing a roundabout, for example.

In the event that the tilt sensor 417 detects that the vehicle has tilted beyond the predetermined value, the image processing means 405 processes the data received from the camera 403 according to an algorithm and establishes that portion of the data which represents a predetermined portion of the captured image, and sends that portion of the data to the image display means 407, to enable the predetermined portion of the captured image to be displayed on the image display means 407. In particular, in the event that the motorcycle is crossing a roundabout for example, as shown in Figure 7, an image of the road directly behind his motorcycle (represented by arrow A on Figure 7) is not necessarily the most useful to him at that time. A more useful image to be presented to him would be the portion Z of the captured image as illustrated in Figure 8, representing the road in his "blind spot" to the left (represented by arrow B in Figure 7). The presentation of this portion of the image would alert him to another vehicle potentially on collision course with his motorcycle.

Although the present example is described with reference to a turn detection means in the form of a tilt sensor, it is to be appreciated that other forms of tilt detection means could be employed, for example, a lateral movement detector (not shown). It is to be appreciated that any suitable portion not directly behind the motorcycle could be presented to the user of the motorcycle in the event that the turn detection means detects that the vehicle is turning (whether in order to change lanes on a motorway, to cross a roundabout, or for any other reason).

For example, in the event that the user is changing lanes from the middle lane to the fast lane, the image display means 407 would display the portion of the view behind and to the right of the vehicle. Alternatively, in the event that the user is changing lanes from the middle lane to the slow lane, the image display means 407 would display the portion of the view behind and to the left of the vehicle.

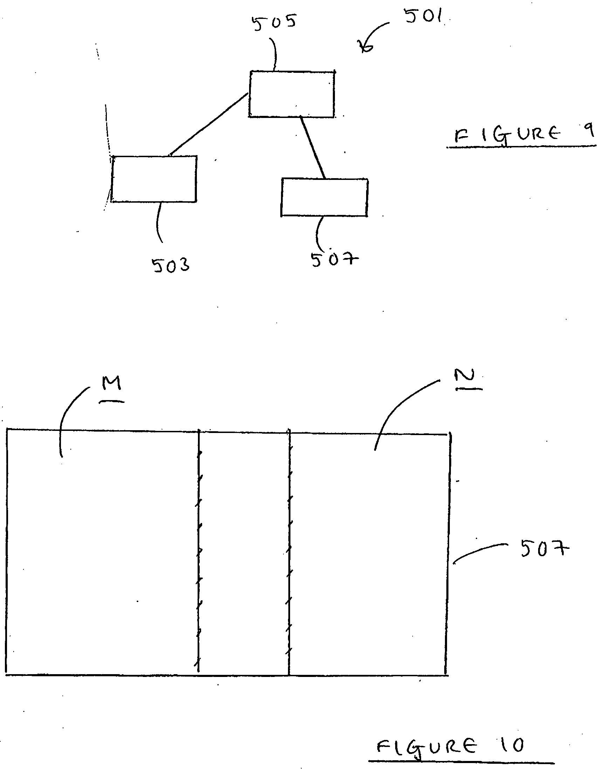

With reference in particular to Figures 9 and 10, a fifth embodiment of the imaging system is represented generally by reference numeral 501.

The imaging system 501 comprises an image capturing means comprising a camera 503 mountable to a vehicle, for example, just above the rear number plate of a motorcycle. The imaging system 501 further comprises image processing means 505 associated with the camera 503 and image display means 507 which in this embodiment is mounted to the safety helmet of the user of the motorcycle.

The image processing means 505 receives data from the camera 503, and by processing the data according to an algorithm, removes the unwanted data and sends the remaining data set, which represents a predetermined portion of the captured image, to the image display means 507, to enable the predetermined portion of the captured image to be displayed on the image display means 507.

In this way, the most useful portion of the road behind the user of the motorcycle is presented to the user, in order to reduce the risk of an accident. To elaborate, the position of the camera 507 and the image size able to be displayed on the image display means 507 when the motorcycle is travelling in the middle lane, may be such that the whole of the middle lane is able to be presented, but only a portion of the slow land and a portion of the fast lane. The image processing means 505 processes the data received from the camera 503 such that some of the data representing the middle lane is removed or, in the alternative, compressed, with the result that more of the available image able to be displayed on the image display means 507 can be comprised of the slow lane (region M on Figure 10) and the fast lane (region N on Figure 10). In this way, a more useful image (as shown in Figure 10) is presented to the user of the motorcycle, since it is the situation in the slow lane and the fast lane which is more useful to the user of the motorcycle in the event that he wishes to change lanes from the middle lane, for example.

It will be appreciated by persons skilled in the art that the above embodiments have been described by way of example only, and not in any limitative sense, and that various alterations and modifications are possible without departing from the scope of the invention as defined by the appended claims.

## Claims

1. An imaging system (503) for use on a vehicle, the system **characterised by**:-
(i) imaging capturing means comprising a camera (501) mountable to a vehicle, for capturing image data relating to the view at least partially behind the vehicle;
(ii) image processing means (505) for processing the image data provided by a single camera; and
(iii) image display means (507) for displaying a representation of said view using at least some of said image data,
wherein said view captured by the camera includes a first region of interest (M, N) and at least one second region of interest adjacent said first region of interest and said display means is operable in a first condition in which said first region of interest is displayed on said display means with a first display width and operable in a second condition in which said first region of interest is displayed on said display means with a second display width and at least one second region of interest is also displayed on said display means adjacent said first region of interest and wherein said second condition, said first display width is greater than said second display width.

2. An imaging system (401) for use on a vehicle, the system **characterised by**:-
(i) image capturing means comprising a camera (403) mountable to a vehicle, for capturing image data relating to the view at least partially behind the vehicle;
(ii) image processing means (405) for processing the image data provided by a single camera;
(iii) image display means (407) for displaying a representation of said view using at least some of said image data; and
(iv) turn detection means (417) mountable to the vehicle for detecting whether the vehicle is turning, to provide turn data,
wherein said image processing means receives said turn data and said image data captured by the camera, and in the event that the turn data is such that it indicates that the vehicle is turning, processes said image data, establishes that portion of the image data which presents a predetermined portion of the captured image and displays said predetermined portion on the image display means.

3. An imaging system as claimed in claim 2, wherein said turn detection means comprises a tilt measurement means mountable to the vehicle for measuring a tilt angle of the vehicle to the vertical, to provide said turn data in the form of tilt data.

4. An imaging system as claimed in claim 2, wherein the turn detection means comprises an accelerometer mountable to the vehicle for detecting when the vehicle turns, to provide said turn data.

5. An imaging system as claimed in any one of claims 2 to 4, wherein in the event that the turn data is such that it indicates that the vehicle is turning, said image processing means is adapted to establish that portion of the image data which represents the portion of the view behind and to the lower left of the vehicle, and displays said portion of the view on the image display means.

6. An imaging system as claimed in any one of claims 2 to 5, wherein in the event that the turn data is such that it indicates that the vehicle is turning, said image processing means is adapted to establish that portion of the image data which represents the portion of the view behind and to the right of the vehicle, and displays said portion of the view on the image display means.

7. An imaging system (1) for use on a vehicle, the system **characterised by**:-
(i) image capturing means comprising a camera (3) mountable to a vehicle, for capturing image data relating to the view at least partially behind the vehicle;
(ii) image processing means (5) for processing the image data provided by a single camera;
(iii) image display means (7) for displaying a representation of said view using at least some of said image data; and
(iv) displacement detection means (9) mountable to the vehicle for detecting movement of the vehicle represented at least by vertical displacement of a portion of the vehicle, to provide displacement data,
whereby said image processing means receives said image data captured by the camera and processes said image data to establish a region of interest and displays said region of interest on said image display means, and said image processing means receives said displacement data and selects a portion of said image data according to the displacement data, said portion of said image data representing said region of interest, and displays said region of interest on said image display means.

8. An imaging system as claimed by claim 7, wherein the displacement detection means comprises suspension movement detection means for detecting whether the suspension of the vehicle has shifted, in order to provide displacement data in the form of suspension shift data.

9. An imaging system as claimed by claim 8, wherein the suspension movement detection means comprises a means for detecting a change in the pitch angle of the vehicle.

10. An imaging system as claimed by claim 7, wherein the displacement detection means comprises vibration detection means for detecting vibration of the image capturing means, in order to provide displacement data in the form of vibration data.

11. An imaging system (201) for-use on a vehicle, the system **characterised by**:-
(i) image capturing means comprising a camera (203) mountable to a vehicle, for capturing image data relating to the view at least partially behind the vehicle;
(ii) image processing means (205) for processing the image data provided by a single camera; and
(iii) image display means (207) for displaying a representation of at least part of said view using at least some of said image data,
wherein said view captured by the camera includes at least a first region of interest that is displayed on the image display means when the vehicle is travelling at a first speed and a second region of interest that is displayed on the image display means when the vehicle is travelling at a second speed, wherein the second region of interest is smaller than the first region of interest and the second speed is greater than the first speed.

12. An imaging system as claimed by claim 11, wherein said view includes further regions of interest, wherein the proportion of the view that comprises the further region of interest is directly related to the speed of the vehicle.

13. An imaging system as claimed by claim 12, wherein the proportion of the view that comprises the further region of interest is substantially inversely proportional to the speed of the vehicle.

14. An imaging system as claimed by any one of claims 11 to 13, further comprising speed measurement means mountable to the vehicle for measuring the speed of the vehicle, to provide said speed data.

## Patentansprüche

1. Abbildungssystem (503) zur Verwendung an einem Fahrzeug, wobei das System **gekennzeichnet ist durch**:
(i) Bilderfassungsmittel, die eine an einem Fahrzeug montierbare Kamera (501) umfassen, zum Erfassen von Bilddaten in Bezug auf die Sicht wenigstens teilweise hinter dem Fahrzeug;
(ii) Bildverarbeitungsmittel (505) zum Verarbeiten der von einer einzigen Kamera bereitgestellten Bilddaten; und
(iii) Bildanzeigemittel (507) zum Anzeigen einer Darstellung der genannten Sicht unter Verwendung von wenigstens einigen der genannten Bilddaten,
wobei die genannte von der Kamera erfasste Sicht eine erste Region von Interesse (M, N) und wenigstens eine zweite Region von Interesse neben der genannten ersten Region von Interesse beinhaltet und das genannte Anzeigemittel in einem ersten Zustand betrieben werden kann, in dem die genannte erste Region von Interesse auf dem genannten Anzeigemittel mit einer ersten Anzeigebreite angezeigt wird, und in einem zweiten Zustand betrieben werden kann, in dem die genannte erste Region von Interesse auf dem genannten Anzeigemittel mit einer zweiten Anzeigebreite angezeigt wird, und wenigstens eine zweite Region von Interesse auch auf dem genannten Anzeigemittel neben der genannten ersten Region von Interesse angezeigt wird, und wobei in dem genannten zweiten Zustand die genannte erste Anzeigebreite größer ist als die genannte zweite Anzeigebreite.

2. Abbildungssystem (401) zur Verwendung an einem Fahrzeug, wobei das System **gekennzeichnet ist durch**:
(i) Bilderfassungsmittel, die eine an einem Fahrzeug montierbare Kamera (403) umfassen, zum Erfassen von Bilddaten in Bezug auf die Sicht wenigstens teilweise hinter dem Fahrzeug;
(ii) Bildverarbeitungsmittel (405) zum Verarbeiten der von einer einzigen Kamera bereitgestellten Bilddaten;
(iii) Bildanzeigemittel (407) zum Anzeigen einer Darstellung der genannten Sicht unter Verwendung von wenigstens einigen der genannten Bilddaten; und
(iv) Abbiegeerkennungsmittel (417), die an dem Fahrzeug montiert werden können, um zu erkennen, ob das Fahrzeug abbiegt, um Abbiegedaten bereitzustellen,
wobei das genannte Bildverarbeitungsmittel die genannten Abbiegedaten und die genannten von der Kamera erfassten Bilddaten empfängt und, falls die Abbiegedaten anzeigen, dass das Fahrzeug abbiegt, die genannten Bilddaten verarbeitet, den Teil der Bilddaten feststellt, der einen vorbestimmten Teil des erfassten Bildes präsentiert, und den genannten vorbestimmten Teil auf dem Bildanzeigemittel anzeigt.

3. Abbildungssystem nach Anspruch 2, wobei das genannte Abbiegeerkennungsmittel ein Neigungsmessmittel umfasst, das an dem Fahrzeug montiert werden kann, um einen Neigungswinkel des Fahrzeugs zur Vertikalen zu messen, um die genannten Abbiegedaten in Form von Neigungsdaten bereitzustellen.

4. Abbildungssystem nach Anspruch 2, wobei das Abbiegeerkennungsmittel einen Beschleunigungsmesser umfasst, der an dem Fahrzeug montiert werden kann, um zu erkennen, wenn das Fahrzeug abbiegt, um die genannten Abbiegedaten bereitzustellen.

5. Abbildungssystem nach einem der Ansprüche 2 bis 4, wobei das genannte Bildverarbeitungsmittel, falls die Abbiegedaten anzeigen, dass das Fahrzeug abbiegt, so ausgelegt ist, dass es den Teil der Bilddaten feststellt, der den Teil der Sicht hinter und links unten von dem Fahrzeug repräsentiert, und den genannten Teil der Sicht auf dem Bildanzeigemittel anzeigt.

6. Abbildungssystem nach einem der Ansprüche 2 bis 5, wobei das genannte Bildverarbeitungsmittel, falls die Abbiegedaten anzeigen, dass das Fahrzeug abbiegt, so ausgelegt ist, dass es den Teil der Bilddaten bestimmt, der den Teil der Sicht hinter und links unten von dem Fahrzeug repräsentiert, und diesen Teil der Sicht auf dem Bildanzeigemittel anzeigt.

7. Abbildungssystem (1) zur Verwendung an einem Fahrzeug, wobei das System **gekennzeichnet ist durch**:
(i) Bilderfassungsmittel, die eine an einem Fahrzeug montierbare Kamera (3) umfassen, zum Erfassen von Bilddaten in Bezug auf die Sicht wenigstens teilweise hinter dem Fahrzeug;
(ii) Bildverarbeitungsmittel (5) zum Verarbeiten der von einer einzigen Kamera bereitgestellten Bilddaten;
(iii) Bildanzeigemittel (7) zum Anzeigen einer Darstellung der genannten Ansicht unter Verwendung von wenigstens einigen der genannten Bilddaten; und
(iv) Verschiebungserkennungsmittel (9), die an dem Fahrzeug montiert werden können, um Bewegung des Fahrzeugs zu erkennen, repräsentiert wenigstens durch eine vertikale Verschiebung eines Teils des Fahrzeugs, um Verschiebungsdaten bereitzustellen,
wobei das genannte Bildverarbeitungsmittel die genannten, von der Kamera erfassten Bilddaten empfängt und die genannten Bilddaten verarbeitet, um eine Region von Interesse festzustellen, und die genannte Region von Interesse auf dem genannten Bildanzeigemittel anzeigt, und das genannte Bildverarbeitungsmittel die genannten Verschiebungsdaten empfängt und einen Teil der genannten Bilddaten gemäß den Verschiebungsdaten auswählt, wobei der genannte Teil der genannten Bilddaten die genannte Region von Interesse repräsentiert und die genannte Region von Interesse auf dem genannten Bildanzeigemittel anzeigt.

8. Abbildungssystem nach Anspruch 7, wobei das Verschiebungserkennungsmittel Aufhängungsbewegungserkennungsmittel zum Erkennen umfasst, ob sich die Aufhängung des Fahrzeugs verlagert hat, um Verschiebungsdaten in Form von Aufhängungsverlagerungsdaten bereitzustellen.

9. Abbildungssystem nach Anspruch 8, wobei das Aufhängungsbewegungserkennungsmittel ein Mittel zum Erkennen einer Änderung des Nickwinkels des Fahrzeugs umfasst.

10. Abbildungssystem nach Anspruch 7, wobei das Verschiebungserkennungsmittel Vibrationserkennungsmittel zum Erkennen von Vibrationen des Bilderfassungsmittels umfasst, um Verschiebungsdaten in Form von Vibrationsdaten bereitzustellen.

11. Abbildungssystem (201) zur Verwendung an einem Fahrzeug, wobei das System **gekennzeichnet ist durch**:
(i) Bilderfassungsmittel, die eine an einem Fahrzeug montierbare Kamera (203) umfassen, zum Erfassen von Bilddaten in Bezug auf die Sicht wenigstens teilweise hinter dem Fahrzeug;
(ii) Bildverarbeitungsmittel (205) zum Verarbeiten der von einer einzigen Kamera bereitgestellten Bilddaten; und
(iii) Bildanzeigemittel (207) zum Anzeigen einer Darstellung von wenigstens einem Teil der genannten Sicht anhand von wenigstens einigen der genannten Bilddaten,
wobei die genannte, von der Kamera erfasste Sicht wenigstens eine erste Region von Interesse, die auf dem Bildanzeigemittel angezeigt wird, wenn das Fahrzeug mit einer ersten Geschwindigkeit fährt, und eine zweite Region von Interesse hat, die auf dem Bildanzeigemittel angezeigt wird, wenn das Fahrzeug mit einer zweiten Geschwindigkeit fährt, wobei die zweite Region von Interesse kleiner ist als die erste Region von Interesse und die zweite Geschwindigkeit höher ist als die erste Geschwindigkeit.

12. Abbildungssystem nach Anspruch 11, wobei die genannte Sicht ferner Regionen von Interesse beinhaltet, wobei der Anteil der Sicht, der die weitere Region von Interesse beinhaltet, direkt auf die Geschwindigkeit des Fahrzeugs bezogen ist.

13. Abbildungssystem nach Anspruch 12, wobei der Anteil der Sicht, der die weitere Region von Interesse umfasst, im Wesentlichen umgekehrt proportional zur Geschwindigkeit des Fahrzeugs ist.

14. Abbildungssystem nach einem der Ansprüche 11 bis 13, das ferner Geschwindigkeitsmessmittel umfasst, die an dem Fahrzeug zum Messen der Geschwindigkeit des Fahrzeugs montierbar sind, um die genannten Geschwindigkeitsdaten bereitzustellen.

## Revendications

1. Système d'imagerie (503) à utiliser dans un véhicule, le système étant **caractérisé par** :
(i) un dispositif de capture d'image comprenant une caméra (501) pouvant être installée sur un véhicule, afin de capturer des données d'image relatives à la vue au moins partielle à l'arrière du véhicule ;
(ii) un dispositif de traitement d'image (505) servant à traiter les données d'image fournies par une seule caméra ; et
(iii) un dispositif d'affichage d'image (507) servant à afficher une représentation de ladite vue, en utilisant au moins quelques-unes des données d'image,
dans lequel ladite vue capturée par la caméra comprend une première région d'intérêt (M, N) et au moins une deuxième région d'intérêt à côté de ladite première région d'intérêt, et ledit dispositif d'affichage peut fonctionner dans une première condition dans laquelle ladite première région d'intérêt est affichée sur ledit dispositif d'affichage avec une première largeur d'affichage, et dans une deuxième condition dans laquelle ladite première région d'intérêt est affichée sur ledit dispositif d'affichage avec une deuxième largeur d'affichage, et au moins une deuxième région d'intérêt est également affichée sur ledit dispositif d'affichage à côté de ladite première région d'intérêt, et dans lequel, dans ladite deuxième condition, ladite première largeur d'affichage est plus grande que ladite deuxième largeur d'affichage.

2. Système d'imagerie (401) à utiliser dans un véhicule, le système étant **caractérisé par** :
(i) un dispositif de capture d'image comprenant une caméra (403) pouvant être installée sur un véhicule, afin de capturer des données d'image relatives à la vue au moins partielle à l'arrière du véhicule ;
(ii) un dispositif de traitement d'image (405) servant à traiter les données d'image fournies par une seule caméra ;
(iii) un dispositif d'affichage d'image (407) servant à afficher une représentation de ladite vue, en utilisant au moins quelques-unes des données d'image ; et
(iv) un dispositif de détection de rotation (417) pouvant être installé sur le véhicule afin de détecter si le véhicule tourne, et de fournir des données de rotation,
dans lequel ledit dispositif de traitement d'image reçoit lesdites données de rotation et lesdites données d'image capturées par la caméra et, dans le cas où les données de rotation indiquent que le véhicule tourne, traite lesdites données d'image, établit la partie des données d'image qui présente une partie prédéterminée de l'image capturée, et affiche ladite partie prédéterminée sur le dispositif d'affichage d'image.

3. Système d'imagerie selon la revendication 2, dans lequel ledit dispositif de détection de rotation comprend un dispositif de mesure d'inclinaison pouvant être installé sur le véhicule, afin de mesurer un angle d'inclinaison du véhicule par rapport à la verticale, et de fournir lesdites données de rotation sous forme de données d'inclinaison.

4. Système d'imagerie selon la revendication 2, dans lequel ledit dispositif de détection de rotation comprend un accéléromètre pouvant être installé sur le véhicule, afin de détecter quand le véhicule tourne, et de fournir lesdites données de rotation.

5. Système d'imagerie selon l'une quelconque des revendications 2 à 4, dans lequel, dans le cas où les données de rotation indiquent que le véhicule tourne, ledit dispositif de traitement d'image peut établir la partie des données d'image qui représente la partie de la vue arrière inférieure gauche du véhicule, et affiche ladite partie de la vue sur le dispositif d'affichage d'image.

6. Système d'imagerie selon l'une quelconque des revendications 2 à 5, dans lequel, dans le cas où les données de rotation indiquent que le véhicule tourne, ledit dispositif de traitement d'image peut établir la partie des données d'image qui représente la partie de la vue arrière droite du véhicule, et affiche ladite partie de la vue sur le dispositif d'affichage d'image.

7. Système d'imagerie (1) à utiliser dans un véhicule, le système étant **caractérisé par** :
(i) un dispositif de capture d'image comprenant une caméra (3) pouvant être installée sur un véhicule, afin de capturer des données d'image relatives à la vue au moins partielle à l'arrière du véhicule ;
(ii) un dispositif de traitement d'image (5) servant à traiter les données d'image fournies par une seule caméra ;
(iii) un dispositif d'affichage d'image (7) servant à afficher une représentation de ladite vue, en utilisant au moins quelques-unes des données d'image ; et
(iv) un dispositif de détection de déplacement (9) pouvant être installé sur un véhicule, afin de détecter le mouvement du véhicule représenté au moins par un déplacement vertical d'une partie du véhicule, et de fournir des données de déplacement,
dans lequel ledit dispositif de traitement d'image reçoit lesdites données d'image capturées par la caméra, traite lesdites données d'image afin d'établir une région d'intérêt, et affiche ladite région d'intérêt sur ledit dispositif d'affichage d'image, et ledit dispositif de traitement d'image reçoit lesdites données de déplacement et sélectionne une partie desdites données d'image en fonction des données de déplacement, ladite partie des données d'image représentant ladite région d'intérêt, et affiche ladite région d'intérêt sur ledit dispositif d'affichage d'image.

8. Système d'imagerie selon la revendication 7, dans lequel le dispositif de détection de déplacement comprend un dispositif de détection de mouvement de suspension servant à détecter si la suspension du véhicule s'est déplacée, afin de fournir des données de déplacement sous forme de données de déplacement de suspension.

9. Système d'imagerie selon la revendication 8, dans lequel le dispositif de détection de mouvement de suspension comprend un dispositif permettant de détecter un changement de l'angle de pas du véhicule.

10. Système d'imagerie selon la revendication 7, dans lequel le dispositif de détection de déplacement comprend un dispositif de détection de vibration servant à détecter une vibration du dispositif de capture d'image, afin de fournir des données de déplacement sous forme de données de vibration.

11. Système d'imagerie (201) à utiliser dans un véhicule, le système étant **caractérisé par** :
(i) un dispositif de capture d'image comprenant une caméra (203) pouvant être installée sur un véhicule, afin de capturer des données d'image relatives à la vue au moins partielle à l'arrière du véhicule ;
(ii) un dispositif de traitement d'image (205) servant à traiter les données d'image fournies par une seule caméra ; et
(iii) un dispositif d'affichage d'image (207) servant à afficher une représentation d'au moins une partie de ladite vue, en utilisant au moins quelques-unes des données d'image,
dans lequel ladite vue capturée par la caméra comprend au moins une première région d'intérêt qui est affichée sur le dispositif d'affichage d'image lorsque le véhicule se déplace à une première vitesse, et une deuxième région d'intérêt qui est affichée sur le dispositif d'affichage d'image lorsque le véhicule se déplace à une deuxième vitesse, dans lequel la deuxième région d'intérêt est plus petite que la première région d'intérêt et la deuxième vitesse est plus grande que la première vitesse.

12. Système d'imagerie selon la revendication 11, dans lequel ladite vue comprend d'autres régions d'intérêt, et dans lequel la proportion de la vue comprenant l'autre région d'intérêt est directement liée à la vitesse du véhicule.

13. Système d'imagerie selon la revendication 12, dans lequel la proportion de la vue comprenant l'autre région d'intérêt est inversement proportionnelle à la vitesse du véhicule.

14. Système d'imagerie selon l'une quelconque des revendications 11 à 13, comprenant en outre un dispositif de mesure de vitesse pouvant être installé sur le véhicule, afin de mesurer la vitesse du véhicule, et de fournir lesdites données de vitesse.
